(19) Europäisches Patentamt / European Patent Office / Office européen des brevets

(11) **EP 4 059 131 B1**

(12) **FASCICULE DE BREVET EUROPEEN**

(45) Date de publication et mention de la délivrance du brevet:
**29.11.2023 Bulletin 2023/48**

(21) Numéro de dépôt: **20803565.9**

(22) Date de dépôt: **10.11.2020**

(51) Classification Internationale des Brevets (IPC):
*H02P 3/18* (2006.01)    *H02P 9/30* (2006.01)

(52) Classification Coopérative des Brevets (CPC):
**H02P 9/305; H02P 3/18**

(86) Numéro de dépôt international:
**PCT/EP2020/081668**

(87) Numéro de publication internationale:
**WO 2021/094327 (20.05.2021 Gazette 2021/20)**

(54) **MODULE DE CONTRÔLE ET PROCÉDÉ DE GESTION DE FIN DE MODE MOTEUR POUR UNE MACHINE ELECTRIQUE TOURNANTE**

STEUERMODUL UND VERFAHREN ZUM STEUERN DES ENDES DES MOTORMODUS FÜR EINE ROTIERENDE ELEKTRISCHE MASCHINE

CONTROL MODULE AND METHOD FOR MANAGING THE END OF MOTOR MODE FOR A ROTARY ELECTRIC MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2019 FR 1912762**

(43) Date de publication de la demande:
**21.09.2022 Bulletin 2022/38**

(73) Titulaire: **VALEO EQUIPEMENTS ELECTRIQUES MOTEUR**
**94046 Créteil Cedex (FR)**

(72) Inventeurs:
• **YANG, Nanfang**
  **94046 CRETEIL CEDEX (FR)**
• **CARREIRO, Wilfried**
  **94046 CRETEIL CEDEX (FR)**
• **KOBYLANSKI, Luc**
  **94046 CRETEIL CEDEX (FR)**

(74) Mandataire: **Valeo Powertrain Systems Service Propriété Intellectuelle Immeuble le Delta 14, avenue des Béguines 95892 Cergy Pontoise (FR)**

(56) Documents cités:
**FR-A1- 3 059 179    FR-A1- 3 077 446**

EP 4 059 131 B1

**Description**

**DOMAINE TECHNIQUE DE L'INVENTION**

Le domaine technique de l'invention est celui de la commande de machine électrique tournante.

La présente invention porte sur un procédé de gestion de fin de couple moteur pour une machine électrique tournante.

**ARRIERE-PLAN TECHNOLOGIQUE DE L'INVENTION**

De façon connue en soi, une machine électrique réversible peut être accouplée au moteur thermique, notamment via la façade accessoire. Cette machine électrique, appelée communément alterno-démarreur, est apte à fonctionner dans un mode générateur pour recharger une batterie du véhicule ainsi que dans un mode moteur pour fournir un couple au véhicule.

Le mode générateur peut être utilisé dans une fonction de freinage récupératif permettant à la machine électrique de fournir de l'énergie électrique à la batterie lors d'une phase de freinage. Le mode moteur peut notamment être utilisé dans une fonction d'arrêt et de redémarrage automatique du moteur thermique en fonction des conditions de circulation (fonction dite STT pour "stop and start" en anglais), une fonction d'assistance au calage du moteur thermique, une fonction dite "boost" en anglais permettant à la machine électrique d'assister ponctuellement le moteur thermique lors d'une phase de roulage en mode thermique, et une fonction de roue libre, dite de "coasting" en anglais, permettant d'automatiser l'ouverture de la chaîne de traction sans action explicite du conducteur pour réduire le régime moteur ou l'arrêter afin de minimiser la consommation en carburant ainsi que les émissions polluantes. En outre le mode moteur peut être utilisé en mode véhicule électrique dans lequel la machine électrique fourni le couple nécessaire pour avancer le véhicule sans couple fourni par le moteur thermique.

Dans les machines connues, l'arrêt du mode moteur lors de l'activation d'une protection (thermique, temporelle, ou de vitesse) provoque l'ouverture des éléments de commutation de l'onduleur de la machine électrique. Le courant contenu dans le stator est alors renvoyé sur le réseau de bord du véhicule, provoquant un à-coup de couple au niveau de la façade accessoires et une surtension sur le réseau de bord.

Il existe ainsi une unité de commande comprenant un algorithme pour la gestion de couple lors de l'arrêt du mode moteur pour éviter ces à-coups en passant par un mode neutre. L'unité de commande transmet une consigne du couple et un gradient de couple d'après une vitesse pour ramener le courant du rotor et ensuite la tension du stator à zéro à cette même vitesse.

Pour ramener le courant du rotor à Zéro, pour sortir du mode moteur rapidement, on impose une consigne de tension rotor à zéro en réalisant une démagnétisation lente en boucle fermé ou égale à moins $U_{B+}$ ($U_{B+}$ étant la tension aux bornes de la machine), afin d'imposer une démagnétisation rapide qui fera baisser le courant dans le rotor. En démagnétisation rapide, la bobine du rotor se retrouve alimentée à l'envers du mode moteur ce qui démagnétise plus rapidement.

Le temps de démagnétisation dépend de la vitesse du rotor.

Ensuite, une fois le rotor démagnétisé, pour éviter de renvoyer le courant sur le réseau, on effectue un court-circuit entre les phases du Stator, par exemple en fermant des MOSFETs étage bas de l'onduleur/redresseur, pour une durée prédéterminée par exemple d'environ 10ms afin que le courant résiduel dans le stator soit éliminé en pertes joules dans les bobines du stator.

Néanmoins cette sortie du mode moteur provoque souvent une oscillation du couple et une surtension sur le réseau électrique lors du court-circuit stator et de la mise à Zéro courant du rotor pour le passage en mode neutre. En effet il arrive régulièrement que la mise en court-circuit du stator se fasse alors qu'il reste du courant dans le rotor.

Une solution serait d'attendre le pire cas de temps de démagnétisation pour mettre en court-circuit le stator. Cependant cela va ralentir le passage du mode moteur au mode neutre ce qui peut gêner le ressenti du conducteur.

Il y a donc aujourd'hui un compromis entre rapidité du passage au mode neutre ou à-coup et surtension.

Une autre solution serait d'avoir une mesure du courant de la bobine inductive du rotor, par exemple à l'aide d'une résistance en série avec la bobine inductive du rotor et une unité de mesure de tension sur cette résistance. Cependant, une telle résistance entraîne un échauffement par des pertes joules et réduit le rendement de la machine. En outre, le temps de démagnétisation est très long du fait qu'à la fin de la démagnétisation, le courant du rotor diminue très lentement.

Il existe donc un besoin de diminuer, ou d'annuler l'oscillation du couple et une surtension sur le réseau électrique pour le passage du mode moteur au mode neutre.

FR 3 059 179 A1 et FR 3 077 446 A1 représentent des états de la technique connus.

**RESUME DE L'INVENTION**

L'invention offre une solution aux problèmes évoqués précédemment, en considérant la dynamique du rotor permettant d'avoir une meilleure simulation de la pente de démagnétisation du rotor et donc mettre le stator en court-circuit lorsque le rotor a moins de courant que dans l'art antérieur sans avoir trop de retard.

Un aspect de l'invention concerne un module de contrôle d'une machine électrique tournante pour véhicule automobile comprenant une bobine rotor et des phases d'un stator alimenté par un réseau électrique, le module de contrôle comprenant un programme de calcul, une entrée comprenant la tension du réseau électrique, une valeur de résistance de la bobine rotor, une valeur de l'induction bobine rotor et en ce que le programme estime un courant bobine rotor estimé suivant cette formule :

$$Irot[k] = Irot[k-1] + (Vrot[k-1] - Irot[k-1] \times Rrot)/Lrot \times Ts$$

dans lequel :

Irot[k-1] est l'estimation du courant bobine rotor préalablement calculé à l'instant k-1
Vrot [k-1] est la tension bobine rotor précédente à l'instant k-1
Ts est le temps d'échantillonnage entre l'indice k-1 et l'indice k,
et dans lequel pour passer la machine électrique d'un mode moteur à un mode neutre, ledit module de contrôle est configuré pour commander une mise au même potentiel des phases du stator après que le courant bobine rotor estimé est égal à une valeur prédéterminée, par exemple 0 ampère.

Grâce à l'invention, le fait d'estimer le courant du rotor considéré comme l'indicateur pour la finalisation, on peut passer en mode neutre lorsque le courant du rotor est quasiment nul. Ainsi on peut diminuer voire supprimer les à-coups et supprimer les surtensions en améliorant la diminution du courant du rotor et la diminution du stator le plus proche de zéro au même moment. En effet, les pics de courant et tension du bus continue, diminuent dans la transition du mode moteur au mode neutre, les oscillations du courant de la phase et de l'excitation se réduisent voire disparaissent, et donc les à-coups de couple qui sont liés sont diminués. De plus, le temps pour sortir du mode moteur vers le mode neutre est réduit considérablement.

Outre les caractéristiques qui viennent d'être évoquées dans le paragraphe précédent, le module de contrôle selon un aspect de l'invention peut présenter une ou plusieurs caractéristiques complémentaires parmi les suivantes, considérées individuellement ou selon toutes les combinaisons techniquement possibles :

Selon un mode de réalisation, le module de contrôle pour machine électrique tournante comporte une mémoire stockant des instructions logicielles pour la mise en oeuvre du calcul courant bobine rotor estimé et des commandes rotor et stator tel que précédemment défini.

Selon un mode de réalisation du module de contrôle, pour passer d'un mode moteur à un mode neutre, le module de contrôle est configuré pour produire une commande stator en fonction du courant bobine rotor estimé.

Selon un mode de réalisation, la tension bobine rotor précédemment calculée est égale à une valeur prédéterminée, par exemple zéro volt ou moins onze virgule trois volt.

Selon un autre mode de réalisation, le module de contrôle comprend une entrée de la tension du réseau (Vdc) et en ce que la tension bobine rotor précédemment calculée est égale à 0V ou est calculée par le module de contrôle selon cette formule :

$$Vrot[k-1] = -1 \times (Vdc[k-1] - Vdiode),$$

Où Vdiode est une constante égale par exemple zéro virgule sept volt.

L'invention concerne aussi une machine électrique tournante comprenant un module de contrôle selon le mode de réalisation précédent, comprenant :

un rotor comprenant une bobine inductive,

un stator comportant un bobinage ayant des phases, et

une unité de commande rotor comprenant :

un interrupteur électronique étage haut relié entre l'entrée de la bobine inductive et la borne positive du réseau,

un interrupteur électronique bas entre la masse et l'entrée de la bobine inductive ,

un interrupteur électronique sortie bas entre la sortie de la bobine inductive et la masse,

une diode comprenant une cathode reliée à borne positive du réseau et une anode reliée à la sortie de la bobine inductive,

dans lequel l'unité de commande rotor peut commander en cas de commande d'arrêt du mode moteur, soit selon une consigne de démagnétisation rapide, la fermeture de l'interrupteur électronique bas, l'ouverture de l'interrupteur électronique sortie bas et l'ouverture de l'interrupteur électronique étage haut, soit selon une consigne de démagnétisation lente, la fermeture de l'interrupteur électronique bas, la fermeture de l'interrupteur électronique sortie bas et l'ouverture de l' interrupteur électronique étage haut,

dans lequel, en cas d'une consigne de démagnétisation rapide, la tension bobine rotor précédente est calculée suivant la formule :

$$Vrot[k-1] = -1 \times (Vdc[k-1] - Vdiode),$$

et

en cas d'une consigne de démagnétisation lente, la tension bobine rotor est égale à zéro.

Selon un mode de réalisation de la machine électrique, la machine électrique tournante comprend un capteur de température, dans lequel, la valeur de la résistance rotor est estimée en fonction de la température mesurée par le capteur de température.

Par exemple la valeur de la résistance rotor est suivant cette formule Rrot = R0(1 + $\alpha$v.$\Delta$T)
Où R0 est une valeur de la résistance de la bobine à une température prédéterminée, $\Delta$T(K) est la variation de température entre la température prédéterminée et la température mesurée par le capteur de température et $\alpha$v est un coefficient de dilatation volumique isobare prédéterminé, valant par exemple 0.0039 à 0.008 et avantageusement 0.00396.

En effet la résistance du rotor varie principalement suivant la température du rotor.

Selon un autre mode de réalisation de la machine électrique, la valeur de la résistance rotor est une valeur prédéterminée.

Ainsi selon ces deux modes de réalisation, pour estimer le courant rotor, soit une valeur équivalente à la résistance bobine rotor ou une valeur estimée de la résistance du rotor est calculée.

Selon un mode de réalisation de la machine électrique, comprenant en outre un capteur de vitesse de rotation du rotor et en ce que la valeur de l'induction bobine rotor est estimée en fonction d'un point de fonctionnement de la machine estimé à partir du couple rotor estimé ou consigne et la vitesse de rotation.

Selon un autre mode de réalisation de la machine électrique, le module de contrôle estime la vitesse de rotation du rotor et en ce que la valeur de l'induction bobine rotor est estimée en fonction d'un point de fonctionnement de la machine estimé à partir du couple rotor estimé ou consigne et la vitesse de rotation estimé.

En effet, l'inductance du rotor varie selon la saturation magnétique, donc une estimation de l'inductance du rotor est calculée pour améliorer la précision du courant bobine rotor estimé.

Selon un autre mode de réalisation, la valeur de l'induction bobine rotor (Lrot) est une valeur équivalente pour la finalisation.

Selon un mode de réalisation de la machine électrique tournante, le module de contrôle comprend une étape de transmission pour la commande du stator, d'un couple de consigne Tem[k] suivant cette formule : Tem[k] = Tem_0 x (Irot[k] / Irot_0)^2
où le courant rotor Irot_0 est le courant rotor estimé au moment où le module de contrôle reçoit la commande d'arrêt du mode moteur et Tem_0 est le couple électromagnétique de la machine au moment où le module de contrôle reçoit la consigne de commande d'arrêt du mode moteur.

Selon un mode de réalisation de la machine électrique tournante, la machine électrique comprend un convertisseur de tension comprenant des interrupteur électronique haut et des interrupteur électronique bas reliées au phases du stator et en ce que lorsque le module de contrôle reçoit une commande d'arrêt du mode moteur précédemment activé, le module de contrôle transmet une commande stator pour modifier la modulation de largeur d'impulsion, des interrupteurs électronique de côté haut et des interrupteur électronique de côté bas en fonction du courant rotor estimé, tel que plus le courant rotor estimé, est faible, plus la modulation de largeur d'impulsion est réduite pour diminuer l'alimentation électrique des phases du stator en tension efficace.

Selon un exemple de ce mode de réalisation et du mode de réalisation précédent, la commande stator est fonction du couple de consigne Tem[k] calculé, par exemple le couple de consigne Tem[k] calculé.

Selon un exemple, la machine électrique comprend une unité de commande stator permettant de commander les interrupteurs côtés hauts et bas par modulation de largeur d'impulsion et en ce que la modulation de largeur d'impulsion est paramétré en fonction de la commande stator.

Un autre aspect de l'invention concerne aussi un procédé d'arrêt d'un mode moteur de la machine électrique tournante précédemment décrite avec ou sans les différents modes de réalisation, comprenant :

- une étape d'estimation du courant bobine rotor (Irot[k]) suivant cette formule

$$Irot[k] = Irot[k-1] + (Vrot[k-1] - Irot[k-1] \times Rrot)/Lrot \times Ts$$

- dans lequel :

- Irot[k-1] est l'estimation du courant bobine rotor préalablement calculé à l'instant k-1

- Vrot [k-1] est la tension bobine rotor précédente à l'instant k-1

- Ts est le temps d'échantillonnage entre l'indice k-1 et l'indice k,

- une étape de réception de commande d'arrêt moteur, comprenant :

- une sous étape de démagnétisation commandant l'ouverture de l' interrupteur électronique étage haut et la fermeture de l'interrupteur électronique bas, soit selon une consigne de démagnétisation rapide, en commandant l'ouverture de l'interrupteur électronique sortie bas ou soit selon une consigne de démagnétisation lente, en commandant la fermeture de l'interrupteur électronique sortie bas et

- une sous étape de commande de mise au même potentiel des phases du stator après que le courant bobine rotor estimé est égal à une valeur prédéterminée.

Selon un mode de réalisation du procédé précédent, le procédé comprend en outre :

- une étape de calcul d'un couple de consigne (Tem[k]) suivant cette formule

$$Tem[k] = Tem\_0 \times (Irot[k] / Irot\_0)^2$$

- où le courant rotor Irot_0 est le courant rotor estimé au moment où le module de contrôle reçoit la commande d'arrêt du mode moteur et Tem_0 est le couple électromagnétique d'une consigne au moment où le module de contrôle reçoit la consigne de commande d'arrêt du mode moteur, et

- une étape de commande du stator en fonction du couple de consigne jusqu'à ce que le courant bobine rotor estimé est égal à une valeur prédéterminée.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 représente un schéma de principe d'un système électrique SE d'un stator.

- La figure 2 représente un schéma de principe électrique d'un système d'alimentation d'un rotor.

- La figure 3 représente schématiquement des blocs d'un diagramme selon un premier exemple de ce mode de réalisation.

- La figure 4 représente schématiquement des blocs d'un diagramme selon un deuxième exemple de ce mode de réalisation.

- La figure 5 représente schématiquement des blocs d'un diagramme selon un troisième exemple de ce mode de réalisation.

- La figure 6A représente un histogramme représentant graphiquement la tension réseau Vdc, le courant du réseau électrique Idc, le courant du rotor Iexc [A] réel et Iph [A] le courant d'une phase du stator selon l'art antérieur.

- La figure 6B représente un histogramme représentant graphiquement la tension réseau Vdc, le courant du réseau électrique Idc, le courant du rotor Iexc [A] réel et Iph [A] le courant d'une phase du stator de la machine électrique selon le premier exemple du mode de réalisation décrit précédemment.

## DESCRIPTION DETAILLEE

Les figures sont présentées à titre indicatif et nullement limitatif de l'invention.

La machine électrique est destinée à être installé dans un véhicule comportant un réseau électrique de bord connecté à une batterie.

Le réseau de bord pourra être de type 12V, 24V, ou 48V. La machine électrique est accouplée à un moteur thermique de façon connue en soi par un système à courroie ou à chaîne implanté en façade accessoires. En outre, la machine électrique est apte à communiquer avec un calculateur moteur suivant un protocole de communication de type LIN ("Local Interconnect Network" en anglais ou "Réseau Internet Local" en français) ou CAN ("Controller Area Network" en anglais qui est un bus de système série) ou Ethernet. La machine électrique pourra fonctionner en mode moteur et peut fonctionner en mode alternateur appelé également mode générateur. Dans le cas où la machine peut fonctionner en mode alternateur, la machine électrique est un alterno-démmareur.

La machine électrique tournante M comprend un stator ayant au moins trois phases U, V, W et trois bobines u, v, w bobinées dans le stator.

Selon une mise en oeuvre de ces modes de réalisation la machine électrique tournante est un alterno-démarreur.

L'alterno-démarreur comprend notamment une partie électrotechnique et un module de contrôle selon l'invention décrit plus en détail dans la suite. Plus précisément, la partie électrotechnique comprend un élément induit et un élément inducteur. Dans un exemple, l'induit est le stator, et l'inducteur est un rotor comportant une bobine d'excitation, appelé dans la suite bobine rotor Lrotor. Le stator comprend un nombre N de phases. Dans l'exemple considéré, le stator comporte les trois phases U, V, W. Dans cet exemple, les bobines u, v, w sont montées en étoile et comprennent chacune à leur sortie la phase correspondante U,V, W respectivement. Selon un autre exemple, la machine électrique comprend six phases.

En variante, le nombre N de phases pourra être égal à 5 pour une machine pentaphasée, à 6 pour une machine de type hexaphasée ou double triphasée ou à 7 pour une machine heptaphasée. Les phases du stator pourront être couplées en triangle ou en étoile. Une combinaison de couplage triangle et étoile est également envisageable.

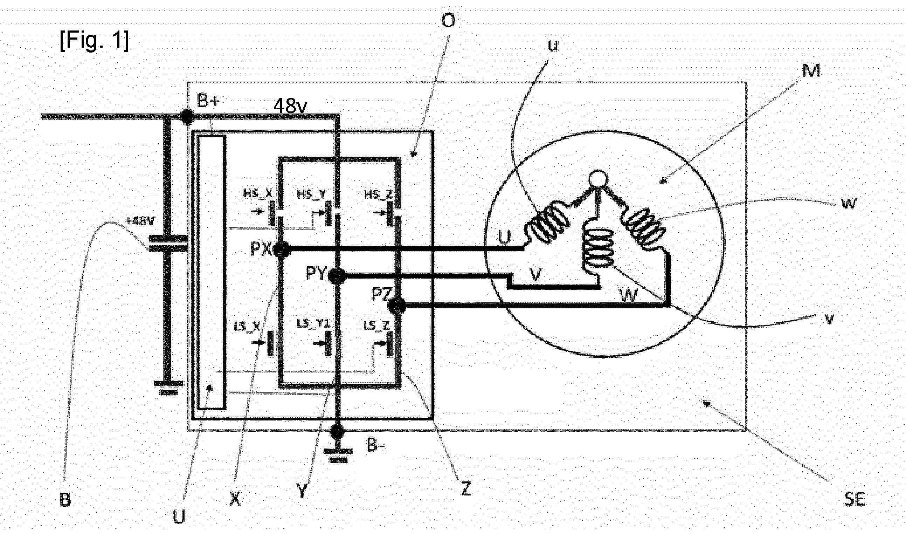

[Fig. 1] représente un schéma de principe d'un système électrique SE d'un stator. Le système électrique SE comprend une première borne d'alimentation B+ et une deuxième borne d'alimentation B- reliées à une source d'alimentation continue B en l'occurrence dans cet exemple de 48 Volts, mais peut être par exemple de 12 Volts ou 24Volts, par exemple une batterie d'un véhicule automobile permettant d'alimenter d'autres équipements électriques non représentés du véhicule par le biais d'un réseau de bord.

La source d'alimentation continue B peut aussi comprendre la batterie d'un véhicule automobile et un bloc de condensateurs monté en parallèle avec la batterie du véhicule. Dans cet exemple, la deuxième borne B- est la masse du système électrique SE.

Le système électrique SE comprend en outre un convertisseur de tension O pour alimenter la machine électrique tournante M à partie de ladite source de tension continue B.

Le convertisseur de tension O comprend une pluralité de bras de commutation montés en parallèle, au même nombre que de phases de la machine électrique tournante M. En l'occurrence le convertisseur de tension O comprend un premier bras X, un deuxième bras Y et un troisième bras Z, mais pourrait en comporter par exemple six dans le cas de l'exemple d'une machine électrique tournante à six phases.

Chaque bras X,Y,Z comprend un interrupteur de côté haut HS_X, HS_Y, HS_Z formant ensemble un groupe haut HS et un interrupteur de côté bas LS_X, LS_Y, LS_Z formant ensemble un groupe bas LS. Chaque interrupteur côté haut et côté bas d'un bras X,Y,Z sont connectés l'un à l'autre en un point milieu PX, PY, PZ.

Dans cet exemple chaque interrupteur du côté haut ou côté bas est un transistor à effet de champ métal-oxyde comprenant chacune une diode de roue libre.

En l'occurrence, dans cet exemple, il y a donc sur le premier bras X un premier interrupteur de côté haut HS_X relié à un premier interrupteur de côté bas LS_X par un premier point milieu PX, sur le deuxième bras Y un deuxième interrupteur de côté haut HS_Y relié à un deuxième interrupteur de côté bas LS_Y par un deuxième point milieu PY et un troisième interrupteur de côté haut HS_Z, respectivement relié à un troisième interrupteur de côté bas LS_Z par un troisième point milieu PZ.

Chaque point milieu PX, PY, PZ est connecté à au moins une phase U, V, W de ladite machine électrique tournante M, soit en l'occurrence dans cet exemple le premier point milieu PX à la phase U, le deuxième point milieu PY à la phase V et le troisième point milieu Z à la phase W.

Le convertisseur de tension O comprend en outre une unité de commande U des interrupteurs de côté haut HS_X, HS_Y, HS_Z et de côté bas LS_X, LS_Y, LS_Z. Ladite unité de commande U comprend donc pour chaque interrupteur une sortie reliée à la commande de l'interrupteur correspondant. Pour ne pas surcharger la figure 1, uniquement la liaison entre une sortie de l'unité de commande U et la commande du troisième interrupteur du côté bas LS_Z et une autre sortie de l'unité de commande U et la commande du deuxième interrupteur du côté haut HS_Y ont été représentées.

L'unité de commande U contrôle les interrupteurs de chaque bras X,Y,Z en modulation de largeur d'impulsion MLI, plus connu sous l'acronyme anglais « PWM » de l'anglais « Pulse Width Modulation ».

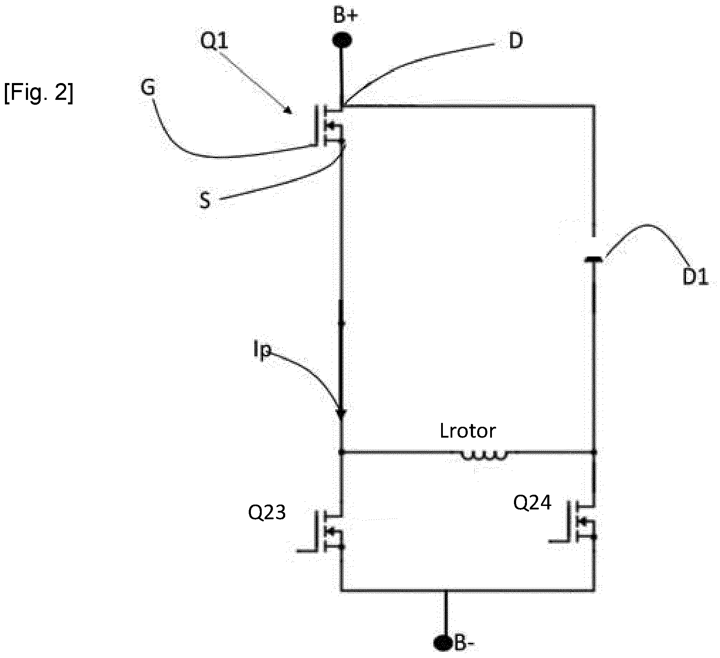

La [fig. 2] représente un schéma de principe électrique d'un système d'alimentation d'un rotor.

Le système d'alimentation rotor comprend une ligne d'alimentation permettant d'alimenter une charge, en l'occurrence la bobine rotor Lrotor à partir d'une source de tension, en l'occurrence la source d'alimentation continue B.

Ladite ligne d'alimentation comprend un interrupteur principal Q1 présentant une première borne principale D et une deuxième borne principale S entres lesquelles un courant principal Ip est destiné à passer.

L'interrupteur principal Q1 comprend en outre une borne de commande G pour sélectivement mettre l'interrupteur principal Q1 dans un état fermé, ouvert ou semi-fermé. L'interrupteur principal Q1 dans son état semi-fermé est équivalent à une résistance variable connectée entre la première D et la deuxième borne principale S commandée par la borne de commande G. En l'occurrence, l'interrupteur principal Q1 est un transistor de puissance. Plus précisément le transistor de puissance est à effet de champ à grille métal-oxyde connu aussi sous l'acronyme MOSFET et est en l'occurrence à enrichissement.

La ligne d'alimentation est un système d'interrupteur 1 de côté haut faisant parti d'un bras de commutation d'un système électrique.

Le bras de commutation comprend un système d'interrupteur de côté bas comportant un interrupteur de côté bas Q23 comportant aussi une première et deuxième borne principale commandée par une borne de commande.

L'interrupteur côté bas Q23 et l'interrupteur principal Q1 est un interrupteur côté haut Q1 et sont reliés à un point milieu.

L'interrupteur côté bas Q23 est monté entre le point milieu et une borne négative B- qui peut être la masse du véhicule.

La bobine rotor Lrotor comprend une borne connectée au point milieu.

Le système électrique comporte en outre un interrupteur électronique sortie bas Q24, dit aussi de démagnétisation, comportant aussi une première et deuxième borne principale, monté entre la borne négative et l'autre borne de la bobine d'excitation et est commandée par une borne de commande.

L' interrupteur électronique de démagnétisation Q24 est commandé par le module de contrôle en mode saturé lorsque la machine électrique est en mode alternateur ou en mode moteur ou pour démagnétiser la bobine d'excitation.

L'interrupteur électronique côté bas Q23 permet avec l'interrupteur électronique de démagnétisation Q24 une démagnétisation contrôlée de la bobine Lrotor lorsque l'interrupteur principal Q1 est ouvert.

Le système d'alimentation rotor comprend en outre dans ce mode de réalisation, une diode D1 entre la borne B+ et la deuxième borne de la bobine rotor Lrotor.

Cette diode D1 permet une démagnétisation rapide du rotor en fermant l'interrupteur côté bas Q23 et ouvrant l'interrupteur de démagnétisation Q24.

Le module de contrôle comprend un circuit d'excitation intégrant un hacheur pour générer un courant d'excitation qui est injecté dans la bobine rotor Lrotor.

La machine électrique tournante comporte un mode moteur, neutre et peut comporter un mode alternateur.

Le module de contrôle comprend en outre un circuit de contrôle comprenant une mémoire et par exemple un microcontrôleur.

Le module de contrôle comprend un algorithme moteur apte à générer une commande de stator et une commande de rotor à partir d'une consigne de couple à appliquer à la machine électrique tournante pour la mettre dans un mode moteur. Par exemple, à la suite d'une demande d'activation d'un mode moteur de la machine électrique tournante, notamment lors du démarrage d'un moteur thermique de véhicule automobile, ledit procédé comporte une étape d'application d'un couple de consigne et d'un gradient de couple de consigne transmis par un calculateur moteur du véhicule automobile.

Dans ce mode de réalisation, le module de contrôle peut commander l'unité de commande U pour contrôler les interrupteurs du convertisseur de tension O pour commander le stator.

Dans un autre mode de réalisation, le module de contrôle est l'unité de commande U.

Le module de contrôle peut donc aussi commander les interrupteurs Q1, Q23, Q24 du système d'alimentation du rotor.

La présente invention vise à diminuer, ou annuler une oscillation du couple et une surtension sur le réseau électrique lors du passage du mode moteur au mode neutre.

Le module de contrôle comprend dans ce mode de réalisation une entrée de mesure de la tension du réseau électrique Vdc, correspondant à la tension de la source d'alimentation continue.

Le module de contrôle comprend une valeur de résistance de la bobine rotor Rrot, une valeur de l'induction bobine rotor Lrot.

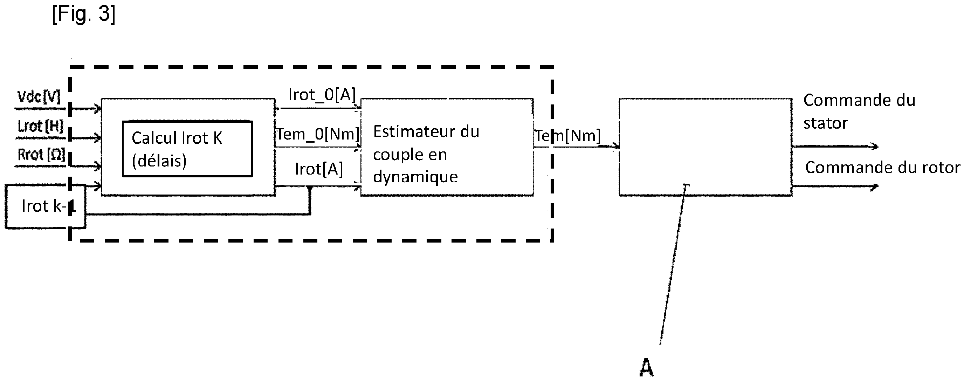

La [Fig. 3] représente schématiquement des blocs d'un diagramme selon un premier exemple de ce mode de réalisation.

Dans le premier mode de réalisation dans lequel le module de contrôle reçoit en entrée la valeur de résistance de la bobine rotor Rrot et la valeur de l'induction bobine rotor Lrot. Chacune de ces deux valeurs peut être une valeur fixe prédéterminée où une valeur calculée et transmise au module de contrôle.

Le module de contrôle comprend une mémoire stockant des instructions logicielles pour le calcul d'estimation d'un courant bobine rotor (Irot [k]).

Le courant bobine rotor estimé est calculé suivant cette formule :

$$Irot[K] = \text{Irot[k}-1] + \frac{\text{Vrot[k}-1] - (\text{Irot} * \text{Rrot})}{\text{Lrot}} * Ts$$

dans lequel Irot[k-1] est l'estimation du courant bobine rotor préalablement calculé à l'instant k-1, Vrot [k-1] est la tension bobine rotor précédente à l'instant k-1

Ts est le temps d'échantillonnage entre l'indice k-1 et l'indice k,

La machine électrique comporte un mode moteur et un mode neutre, et en ce que pour passer d'un mode moteur à un mode neutre, ledit module de contrôle est configuré pour commander une mise au même potentiel des phases du stator après que le courant bobine rotor estimé (Irot [k]) est égal à une valeur prédéterminée, par exemple 0 ampère.

Dans ce mode de réalisation, le module de contrôle calcule la tension bobine rotor selon cette formule :

Vrot[k-1] = -1 x (Vdc[k-1] - Vdiode), où Vdiode est une constante égale par exemple 0.7V représentant la tension aux bornes de la diode D1.

Selon un mode de réalisation, le module de contrôle est configuré pour produire une commande stator en fonction du courant du rotor estimé (Irot [K]) estimé.

En particulier, le module de contrôle est configuré dans ce mode de réalisation pour commander les interrupteurs côtés bas fermé LS_X, LS_Y, LS_Z et les interrupteurs côtés haut HS_X, HS_Y, HS_Z ouvert du système électrique SE du stator après que le courant du rotor estimé (Irot [k]) est égal à une valeur prédéterminée, par exemple 0 ampère. Cela met les phases du stator à la masse. Selon un autre mode de réalisation, le module de contrôle est configuré pour commander les interrupteurs côtés bas ouvert LS_X, LS_Y, LS_Z et les interrupteurs côtés haut HS_X, HS_Y, HS_Z fermé du système électrique SE du stator après que le courant du rotor estimé (Irot [K]) est égal à une valeur prédéterminée, par exemple 0 ampère. Dans cet exemple cela met en les phases du stator au même potentiel qui est à la borne B+.

La commande des interrupteurs côtés bas fermé LS_X, LS_Y, LS_Z et des interrupteurs côtés haut HS_X, HS_Y, HS_Z ouvert du système électrique SE du stator peut être réalisé par une commande stator envoyée à l'unité de commande ou directement en commandant les interrupteurs.

L'invention permet ainsi, à la suite de la demande d'arrêt du mode moteur, de piloter la machine électrique en fonction d'un courant rotor estimé Irot pour diminuer le courant prélevé avant l'ouverture complète des interrupteurs (éléments de commutation) de l'onduleur. Le fait d'estimer le courant de cette façon permet d'une part de piloter la mise au potentiel des phases du stator quand la bobine a un courant rotor très faible ou nul ce qui évite ou réduit un court-circuit au niveau des phases du stator et donc aussi l'oscillation du couple et la surtension. En outre le fait d'être estimé et non réel permet d'être plus rapide et de ne pas être dépendant d'un système de mesure ou calcul de courant réel rotor.

En effet, la formule permet que le courant estimé soit proche voir égal au courant réel estimé pendant au moins tout le début de la démagnétisation du rotor et à la fin de la démagnétisation que le courant estimé calculé est plus rapidement proche de 0 ampère que le courant rotor réel pour diminuer le temps de passage mode moteur au mode neutre.

Le courant estimé permet ainsi d'une part d'éviter ou réduire les à-coups de couple ainsi que les surtensions sur le réseau de bord du véhicule automobile mais en outre d'être fiable et rapide.

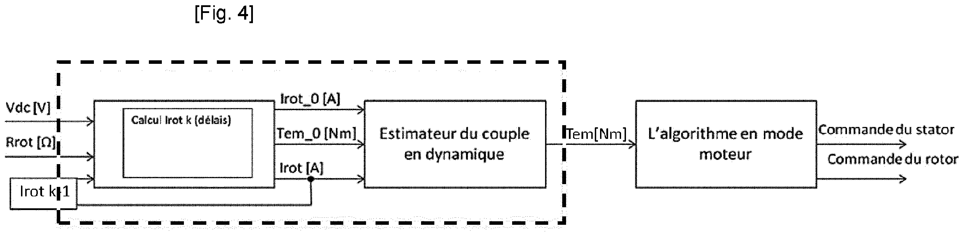

La [fig. 4] représente schématiquement des blocs d'un diagramme selon un deuxième exemple de ce mode de réalisation.

La machine électrique est identique à la machine électrique précédemment décrite sauf en ce qu'elle comporte en outre un capteur de température par exemple monté contre un bobinage du stator ou contre un palier de la machine électrique et en ce que la valeur de la résistance rotor Rrot est estimée en fonction de la température mesurée T par le capteur de température. Par exemple la valeur de la résistance rotor Rrot est suivant cette formule Rrot = R0(1 + $\alpha$v.$\Delta$T) Où R0 est une valeur de la résistance de la bobine rotor à une température prédéterminée, par exemple 25°C correspondant à 293.15 et $\Delta$T est la variation de température entre la température prédéterminée et la température mesurée par le capteur de température, par exemple 125°C - 25°C = 100°C et $\alpha$v(K-1) est un coefficient de dilatation volumique isobare prédéterminé, valant par exemple 0.00396.

R0 peut par exemple être égal à 0.47 ohm et par exemple à 120°C la résistance bobine rotor à une valeur de 0.65 ohm.

Ainsi, dans cet exemple, le module de contrôle estime le courant bobine rotor de manière plus précise puisqu'elle prend en compte l'élévation de la résistance de la bobine rotor liée à la température.

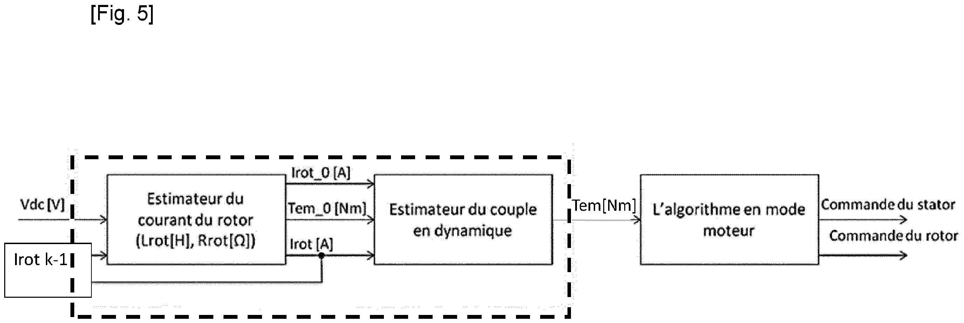

La [fig. 5] représente schématiquement des blocs d'un diagramme selon un troisième exemple de ce mode de réalisation

La machine électrique est identique à la machine électrique précédemment décrite sauf en ce que la machine électrique comprend en outre un capteur de position et de vitesse de rotation du rotor et en ce que le module de contrôle estime la valeur de l'induction bobine rotor Lrot en fonction d'un point de fonctionnement de la machine électrique estimé à partir du couple estimé et la vitesse de rotation du rotor.

Les mesures de la position angulaire du rotor pourront être réalisées au moyen de capteurs analogiques à effet hall et d'une cible magnétique associée qui est solidaire en rotation du rotor.

Selon un autre mode de réalisation non représenté, le module de contrôle est configuré pour passer du mode moteur au mode neutre, une commande stator en fonction du couple de consigne et un gradient de couple prédéterminé qui dépend d'une vitesse de rotation de la machine électrique tournante et en ce que le module de contrôle commande la mise au même potentiel des phases stator lorsque le courant rotor estimé Irot est égal ou inférieur à la valeur prédéterminée.

Selon un exemple de ce mode de réalisation, la commande de stator est définie par un angle d'avance entre une tension du stator et une force électromotrice de la machine électrique tournante, un angle d'ouverture d'éléments de commutation d'un onduleur, et une tension ondulée.

Selon une mise en oeuvre de ce deuxième mode de réalisation, plus la vitesse de rotation de la machine électrique tournante est élevée, moins le gradient de couple prédéterminé est important.

Selon une mise en oeuvre de ces modes de réalisation, la demande d'arrêt du mode moteur est générée à la suite de l'expiration d'un délai d'application de couple.

Selon une mise en oeuvre de ces modes de réalisation, la demande d'arrêt du mode moteur est générée suite un dépassement d'un seuil de température.

Selon une mise en oeuvre de ces modes de réalisation, la demande d'arrêt du mode moteur est générée à la suite d'un dépassement d'un seuil de vitesse de rotation de la machine électrique tournante.

Selon une mise en oeuvre de ces modes de réalisation la commande de rotor est une valeur d'un courant d'excitation.

L'invention concerne aussi un procédé de passage d'un mode moteur à un mode neutre de la machine électrique.

Le procédé concerne le pilotage en couple de la machine électrique lors d'une phase de démarrage avorté du moteur thermique.

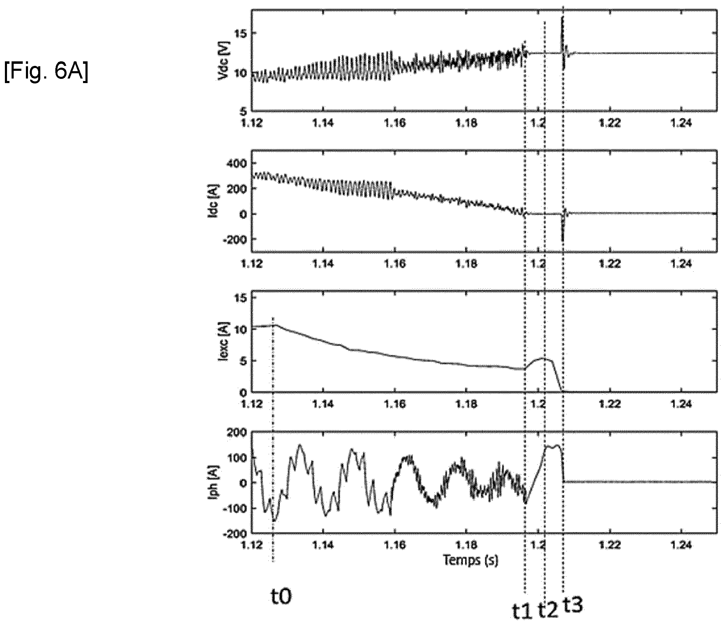

[Fig. 6A] représente un histogramme représentant graphiquement la tension réseau Vdc, le courant du réseau électrique Idc, le courant du rotor Iexc [A] réel et Iph [A] le courant d'une phase du stator selon l'art antérieur.

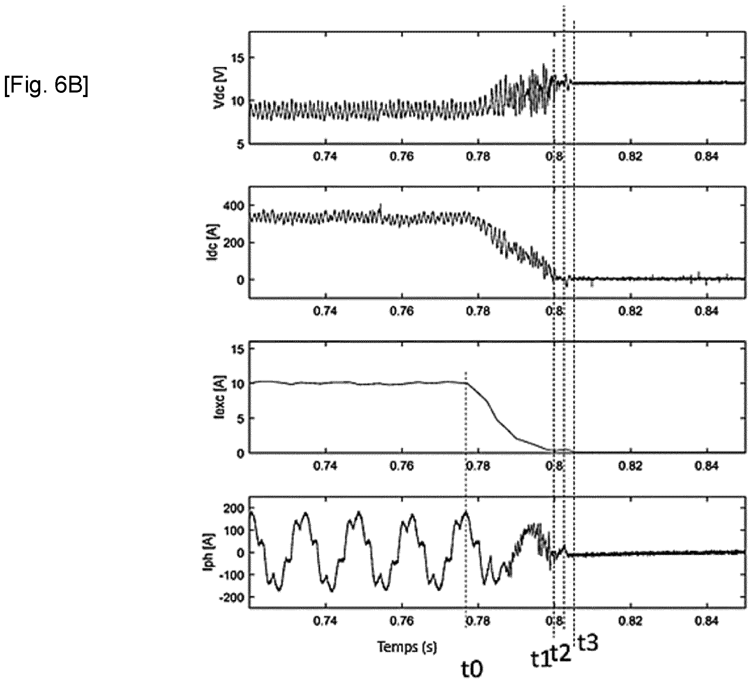

[Fig. 6B] représente un histogramme représentant graphiquement la tension réseau Vdc, le courant du réseau électrique Idc, le courant du rotor Iexc [A] réel et Iph [A] le courant d'une phase du stator de la machine électrique selon le premier exemple du mode de réalisation décrit précédemment.

Le procédé selon l'invention comporte une étape d'estimation du courant bobine rotor (Irot[k]) suivant la formule précédemment décrite.

On peut voir sur chaque histogramme, un instant t0 (environ 1.125 seconde pour l'histogramme de la figure 6A et 0.775 seconde pour l'histogramme de la figure 6B), lors d'une demande de sortie du mode moteur de la machine électrique tournante lors du démarrage d'un moteur thermique du véhicule automobile, le calculateur moteur transmet une instruction correspondante à la machine électrique via un bus de communication, ainsi qu'un couple de consigne, et un gradient de consigne. Ce démarrage du moteur thermique se produit par exemple dans le cadre de la fonction d'arrêt et de redémarrage automatique du moteur thermique en fonction des conditions de circulation (fonction dite STT pour "stop and start" en anglais).

Le module de contrôle commande à cet instant t0 dans ce mode de réalisation selon une consigne de démagnétisation rapide, une commande rotor et une commande stator selon un calcul d'un couple de consigne (Tem[k]) suivant cette formule :Tem[k] = Tem_0 x (Irot[k] / Irot_0)^2 pour diminuer le courant d'excitation lexc de la bobine rotor ainsi que le courant Iph dans chaque phase du stator. Le couple électromagnétique d'une consigne Tem_0 au moment où le module de contrôle reçoit la consigne de commande d'arrêt du mode moteur est enregistré pour calculer Tem[k] à ce moment t0.

On peut voir que le courant lexc du courant de la bobine diminue suivant une courbe jusqu'à un instant t1. L' instant t1 (environ au niveau 1.195 seconde pour l'histogramme de la figure 6A et 0.8 seconde pour l'histogramme de la figure 6B).

A l'instant t1, dans l'exemple de l'art antérieur représenté par l'histogramme de la figure 6A, le courant réel bobine rotor lexc est d'environ 5 ampère alors que dans l'exemple du mode de réalisation de l'invention représenté par l'histogramme de la figure 6B, le courant réel bobine rotor lexc est proche de 0,5 ampères.

A l'instant t0, le module de contrôle commande la démagnétisation rapide du rotor par la fermeture de l'interrupteur électronique bas Q23, l'ouverture de l'interrupteur électronique sortie bas Q24 et l'ouverture de l' interrupteur électronique étage haut Q1 jusqu'à un instant t2.

A l'instant t2, correspond à une étape de commande de mise en court-circuit des phases du stator dans l'histogramme de la figure 6A et qui correspond à une étape de commande de mise au même potentiel des phases du stator dans l'histogramme de la figure 6B selon l'exemple du mode de réalisation de l'invention est après que le courant bobine rotor estimé (Irot [k] est égal à 0. En effet, la bobine de rotor n'ayant pus de courant ou très peu de courant, la mise en court-circuit des phases du stator entraîne un pic de courant sur le réseau très faible voire nul.

On peut voir qu'à partir de t2, si la bobine rotor Lrotor comporte du courant, comme le rotor tourne et que les phases du stator sont mises au même potentiel, cela délivre un courant formant un court-circuit et donc un pic de courant dans l'histogramme de la figure 6A et un très faible courant dans l'histogramme de la figure 6B et ceux jusqu'à un instant t3.

Durant cette période, on peut voir sur l'histogramme de l'art antérieur représenté sur la figure 6A, une surtension Vdc pouvant entraîner des perturbations sur le réseau du véhicule tandis que sur l'histogramme de la figure 6B, il n'y a pas ou très peu de surtension du fait du courant d'excitation réel proche de 0 A au moment t2.

L' instant t3 (environ au niveau 1.207 seconde pour l'histogramme de la figure 6A et 0.805 seconde pour l'histogramme de la figure 6B), correspond au passage de la machine électrique en mode neutre. La machine a tous ses ponts ouverts. La bobine rotor Lrotor n'est pas alimentée et ne restitue plus d'énergie emmagasinée.

La période de court-circuit entre t2 et t3 est de 0.007 seconde pour l'histogramme de la figure 6A et 0.003 seconde pour l'histogramme de la figure 6B.

La période de court-circuit est plus courte selon l'invention du fait du courant plus faible dans le rotor à l'instant t1.

Sauf précision contraire, un même élément apparaissant sur des figures différentes présente une référence unique.

## Revendications

1. Module de contrôle d'une machine électrique tournante pour véhicule automobile comprenant une bobine rotor (Lrotor) et des phases (U, V, W) d'un stator alimenté par un réseau électrique, le module de contrôle comprenant un programme de calcul, une valeur de la tension bobine rotor (Vrot ), une valeur de résistance de la bobine rotor (Rrot), une valeur de l'induction bobine rotor (Lrot) et en ce que le programme estime un courant bobine rotor estimé (Irot [k]) suivant cette formule : Irot[k] = Irot[k-1] + (Vrot[k-1] - Irot[k-1] x Rrot)/Lrot x Ts dans lequel :

   o Irot[k-1] est l'estimation du courant bobine rotor préalablement calculé à l'instant k-1
   o Vrot [k-1] est la tension bobine rotor précédente à l'instant k-1
   o Ts est le temps d'échantillonnage entre l'indice k-1 et l'indice k,

   et dans lequel pour passer la machine électrique d'un mode moteur à un mode neutre, ledit module de contrôle est configuré pour commander une mise au même potentiel des phases du stator après que le courant bobine rotor estimé (Irot [k]) est égal à une valeur prédéterminée, par exemple 0 ampère.

2. Module de contrôle selon la revendication précédente, dans lequel pour passer d'un mode moteur à un mode neutre, ledit module de contrôle est configuré pour produire une commande stator en fonction du courant bobine rotor estimé (Irot [k]).

3. Module de contrôle selon l'une des revendications précédentes, dans lequel le module de contrôle comprend une entrée de la tension du réseau (Vdc) et en ce que la tension bobine rotor est égale à 0V ou est calculée par le module de contrôle selon cette formule :

$$Vrot[k-1] = -1 \times (Vdc[k-1] - Vdiode),$$

Où Vdiode est une constante égale par exemple 0.7V.

4. Machine électrique tournante comprenant un module de contrôle selon la revendication précédente, comprenant :

- un rotor comprenant une bobine inductive,
- un stator comportant un bobinage ayant des phases, et
- une unité de commande rotor comprenant :

o un interrupteur électronique étage haut (Q1) relié entre l'entrée de la bobine inductive et la borne positive du réseau,
o un interrupteur électronique bas (Q23) entre la masse et l'entrée de la bobine inductive ,
o un interrupteur électronique sortie bas (Q24) entre la sortie de la bobine inductive et la masse,
o une diode (D) comprenant une cathode reliée à borne positive du réseau et une anode reliée à la sortie de la bobine inductive,

dans lequel l'unité de commande rotor peut commander en cas de commande d'arrêt du mode moteur, soit selon une consigne de démagnétisation rapide, la fermeture de l'interrupteur électronique bas (Q23), l'ouverture de l'interrupteur électronique sortie bas (Q24) et l'ouverture de l' interrupteur électronique étage haut (Q1), soit selon une consigne de démagnétisation lente, la fermeture de l'interrupteur électronique bas (Q23), la fermeture de l'interrupteur électronique sortie bas (Q24) et l'ouverture de l' interrupteur électronique étage haut (Q1), dans lequel, en cas d'une consigne de démagnétisation rapide, la tension bobine rotor précédente est calculée suivant la formule :

$$Vrot[k-1] = -1 \times (Vdc[k-1] - Vdiode),$$

et en cas d'une consigne de démagnétisation lente, la tension bobine rotor est égale à zéro.

5. Machine électrique tournante selon la revendication précédente, comprenant un capteur de température, dans lequel, la valeur de la résistance rotor (Rrot) est estimée en fonction de la température mesurée par le capteur de température.

6. Machine électrique tournante selon l'une des revendications précédentes, dans lequel la valeur de l'induction bobine rotor (Lrot) est estimée en fonction d'un point de fonctionnement de la machine estimé à partir du couple et vitesse.

7. Machine électrique tournante selon l'une des revendications précédentes, dans lequel le module de contrôle comprend une étape de transmission d'une commande stator et d'une commande rotor, d'un couple de consigne Tem[k] suivant cette formule :

-

$$Tem[k] = Tem\_0 \times (Irot[k] / Irot\_0)^2$$

- où le courant rotor Irot_0 est le courant rotor estimé au moment où le module de contrôle reçoit la commande d'arrêt du mode moteur et Tem_0 est le couple électromagnétique estimé de la machine au moment où le module de contrôle reçoit la consigne de commande d'arrêt du mode moteur jusqu'à ce que le courant bobine rotor estimé (Irot [k) est égal à une valeur prédéterminée.

8. Machine électrique tournante selon l'une des revendications précédentes, comprenant un convertisseur de tension comprenant des interrupteurs électronique haut et des interrupteurs électronique bas reliés au phases du stator et en ce que lorsque le module de contrôle reçoit une commande d'arrêt du mode moteur précédemment activé, le module de contrôle transmet une commande stator pour modifier la modulation de largeur d'impulsion (MLI) des interrupteurs électroniques de côté haut et des interrupteurs électronique de côté bas en fonction du courant rotor estimé (Irot k), tel que plus le courant rotor estimé (Irot k est faible, plus la modulation de largeur d'impulsion est réduite pour diminuer l'alimentation électrique des phases du stator en tension efficace.

9. Procédé d'arrêt d'un mode moteur d'une machine électrique tournante pour véhicule automobile selon l'une des revendications précédentes comprenant :

- une étape d'estimation du courant bobine rotor (Irot[K]) suivant cette formule : Irot[k] = Irot[k-1] + (Vrot[k-1] - Irot[k-1] x Rrot)/Lrot x Ts dans lequel :

  o Irot[k-1] est l'estimation du courant bobine rotor préalablement calculé à l'instant k-1
  ◦ Vrot [k-1] est la tension bobine rotor précédente à l'instant k-1
  ◦ Ts est le temps d'échantillonnage entre l'indice k-1 et l'indice k,

- une étape de réception de commande d'arrêt moteur, comprenant :

  ◦ une sous étape de démagnétisation commandant l'ouverture de l' interrupteur électronique étage haut (Q1) et la fermeture de l'interrupteur électronique bas (Q23), soit selon une consigne de démagnétisation rapide, en commandant l'ouverture de l'interrupteur électronique sortie bas (Q24),ou soit selon une consigne de démagnétisation lente, en commandant la fermeture de l'interrupteur électronique sortie bas (Q24) et
  o une sous étape de commande de mise au même potentiel des phases du stator après que le courant bobine rotor estimé (Irot [K]) est égal à une valeur prédéterminée.

10. Procédé d'arrêt d'un mode moteur d'une machine électrique tournante pour véhicule automobile selon la revendication précédente comprenant en outre :

- une étape de calcul d'un couple de consigne (Tem[k]) suivant cette formule :Tem[k] = Tem_0 x (Irot[k] / Irot_0)^2 où le courant rotor Irot_0 est le courant rotor estimé au moment où le module de contrôle reçoit la commande d'arrêt du mode moteur et Tem_0 est le couple électromagnétique d'une consigne au moment où le module de contrôle reçoit la consigne de commande d'arrêt du mode moteur, et
- une étape de commande du rotor et du stator en fonction du couple de consigne jusqu'à ce que le courant bobine rotor estimé (Irot [k) est égal à une valeur prédéterminée.

**Patentansprüche**

1. Steuermodul einer drehenden elektrischen Maschine für ein Kraftfahrzeug, die eine Rotorspule (Lrotor) und Phasen (U, V, W) eines Stators umfasst, der von einem Stromnetz gespeist wird, wobei das Steuermodul eine Rechenprogramm, einen Wert der Rotorspulenspannung (Vrot) einen Widerstandswert der Rotorspule (Rrot) einen Wert der Rotorspuleninduktion (Lrot) umfasst, und dadurch, dass das Programm einen geschätzten Rotorspulenstrom (Irot [k) gemäß dieser Formel schätzt:

```
Irot[k] = Irot[k-1] + (Vrot[k-1] - Irot[k-1] x Rrot)/Lrot
x Ts
```

wobei:

  o Irot[k-1] die Schätzung des zuvor zum Zeitpunkt k-1 berechneten Rotorspulenstroms ist
  o Vrot [k-1] die vorige Rotorspulenspannung zum Zeitpunkt k-1 ist
  o Ts die Abtastzeit zwischen dem Index k-1 und dem Index k ist,

und wobei zum Schalten der elektrischen Maschine von einem Motormodus in einen Neutralmodus das Steuermodul dazu ausgebildet ist, ein Setzen der Phasen des Stators auf das gleiche Potential zu steuern, nachdem der geschätzte Rotorspulenstrom (Irot [k]) gleich einem vorbestimmten Wert ist, zum Beispiel 0 Ampere.

2. Steuermodul nach dem vorhergehenden Anspruch, wobei zum Schalten von einem Motormodus in einen Neutralmodus das Steuermodul dazu ausgebildet ist, einen Statorbefehl in Abhängigkeit vom geschätzten Rotorspulenstrom (Irot [k] zu erzeugen.

**3.** Steuermodul nach einem der vorhergehenden Ansprüche, wobei das Steuermodul einen Eingang der Netzspannung (Vdc) umfasst, und dadurch, dass die Rotorspulenspannung gleich 0 V ist oder vom Steuermodul gemäß dieser Formel berechnet wird:

$$\mathrm{Vrot[k-1] = -1\ x\ (Vdc[k-1]\ -\ Vdiode),}$$

Wobei Vdiode eine Konstante gleich beispielsweise 0,7 V ist.

**4.** Drehende elektrische Maschine mit einem Steuermodul nach dem vorhergehenden Anspruch, umfassend:

- einen Rotor mit einer induktiven Spule,
- einen Stator mit einer Wicklung, der Phasen aufweist, und
- eine Rotorsteuereinheit mit:

  o einem elektronischen Schalter der oberen Stufe (Q1) der zwischen den Eingang der induktiven Spule und den positiven Anschluss des Netzes geschaltet ist,
  o einem unteren elektronischen Schalter (Q23) zwischen der Masse und dem Eingang der induktiven Spule,
  o einem unteren Ausgangsschalter (Q24) zwischen dem Ausgang der induktiven Spule und der Masse,
  o einer Diode (D), die eine Kathode, die mit dem positiven Anschluss des Netzes verbunden ist, und eine Anode umfasst, die mit dem Ausgang der induktiven Spule verbunden ist,

wobei die Rotor-Steuereinheit im Falle eines Stoppbefehls für den Motormodus, entweder gemäß einer Vorgabe für schnelle Entmagnetisierung das Schließen des unteren elektronischen Schalters (Q23), das Öffnen des unteren elektronischen Ausgangsschalters (Q24) und das Öffnen des elektronischen Schalters der oberen Stufe (Q1) oder gemäß einer Vorgabe für langsame Entmagnetisierung das Schließen des unteren elektronischen Schalters (Q23), das Schließen des unteren elektronischen Ausgangsschalters (Q24) und das Öffnen des elektronischen Schalters der oberen Stufe (Q1) steuern kann, wobei im Falle einer Vorgabe für schnelle Entmagnetisierung die vorige Rotorspulenspannung gemäß der folgenden Formel berechnet wird:

$$\mathrm{Vrot[k-1] = -1\ x\ (Vdc[k-1]\ -\ Vdiode),}$$

und
im Falle einer Vorgabe für langsame Entmagnetisierung die Rotorspulenspannung gleich null ist.

**5.** Drehende elektrische Maschine nach dem vorhergehenden Anspruch, umfassend einen Temperatursensor, wobei der Wert des Rotorwiderstands (Rrot) je nach der Temperatur geschätzt wird, die vom Temperatursensor gemessen wird.

**6.** Drehende elektrische Maschine nach einem der vorhergehenden Ansprüche, wobei der Wert der Rotorspuleninduktion (Lrot) je nach einem Betriebspunkt der Maschine geschätzt wird, der anhand des Drehmoments und der Drehzahl geschätzt wird.

**7.** Drehende elektrische Maschine nach einem der vorhergehenden Ansprüche, wobei das Steuermodul einen Schritt des Übertragens eines Statorbefehls und eines Rotorbefehls, eines Solldrehmoments Tem[k] gemäß der folgenden Formel umfasst:

-

$$\mathrm{Tem[k] = Tem\_0\ x\ (Irot[k]\ /\ Irot\_0)^2}$$

- wobei der Rotorstrom Irot_0 der geschätzte Rotorstrom zu dem Zeitpunkt ist, zu dem das Steuermodul den Stoppbefehl für den Motormodus empfängt und Tem_0 das geschätzte elektromagnetische Drehmoment der Maschine zu dem Zeitpunkt ist, zu dem das Steuermodul die Vorgabe für den Stoppbefehl für den Motormodus empfängt, bis der geschätzte Rotorspulenstrom (Irot [k]) gleich einem vorbestimmten Wert ist.

8. Drehende elektrische Maschine nach einem der vorhergehenden Ansprüche, umfassend einen Spannungswandler, der obere elektronische Schalter und untere elektronische Schalter umfasst, die mit den Phasen des Stators verbunden sind, und dadurch, dass, wenn das Steuermodul einen Stoppbefehl für den zuvor aktivierten Motormodus empfängt, das Steuermodul einen Statorbefehl zur Änderung der Pulsweitenmodulation (PWM) der elektronischen Schalter auf der oberen Seite und der elektronischen Schalter auf der unteren Seite je nach dem geschätzten Rotorstrom (Irot k) so überträgt, dass, je schwächer der geschätzte Rotorstrom (Irot k) ist, desto weiter die Pulsweitenmodulation verringert ist, um die Stromversorgung der Phasen des Stators mit effektiver Spannung zu verringern.

9. Verfahren zum Stoppen eines Motormodus einer drehenden elektrischen Maschine für ein Kraftfahrzeug nach einem der vorhergehenden Ansprüche umfassend:

- einen Schritt des Schätzens des Rotorspulenstroms (Irot[K]) gemäß der folgenden Formel: Irot[k] = Irot[k-1] + (Vrot[k-1] - Irot[k-1] x Rrot)/Lrot x Ts wobei:

o Irot[k-1] die Schätzung des zuvor zum Zeitpunkt k-1 berechneten Rotorspulenstroms ist
o Vrot [k-1] die vorige Rotorspulenspannung zum Zeitpunkt k-1 ist
o Ts die Abtastzeit zwischen dem Index k-1 und dem Index k ist,

- einen Schritt des Empfangens eines Motorstoppbefehls umfassend:

o einen Unterschritt des Entmagnetisierens, der das Öffnen des elektronischen Schalters der oberen Stufe (Q1) und das Schließen des unteren elektronischen Schalters (Q23) entweder gemäß einer Vorgabe für schnelle Entmagnetisierung durch Steuerung des Öffnens des unteren elektronischen Ausgangsschalters (Q24) oder gemäß einer Vorgabe für langsame Entmagnetisierung durch Steuerung des Schließens des unteren elektronischen Ausgangsschalters (Q24) steuert, und
o einen Unterschritt des Steuerns des Setzens der Phasen des Stators auf das gleiche Potential, nachdem der geschätzte Rotorspulenstrom (Irot [k]) gleich einem vorbestimmten Wert ist.

10. Verfahren zum Stoppen eines Motormodus einer drehenden elektrischen Maschine für ein Kraftfahrzeug nach dem vorhergehenden Anspruch, ferner umfassend:

- einen Schritt des Berechnens eines Solldrehmoments (Tem[k]) gemäß der folgenden Formel: Tem[k] = Tem_0 x (Irot[k] / Irot_0)^2
wobei der Rotorstrom Irot_0 der geschätzte Rotorstrom zu dem Zeitpunkt ist, zu dem das Steuermodul den Stoppbefehl für den Motormodus empfängt und Tem_0 das elektromagnetische Drehmoment einer Vorgabe zu dem Zeitpunkt ist, zu dem das Steuermodul die Vorgabe für den Stoppbefehl für den Motormodus empfängt, und
- einen Schritt des Steuerns des Rotors und des Stators je nach dem Solldrehmoment, bis der geschätzte Rotorspulenstrom (Irot [k]) gleich einem vorbestimmten Wert ist.

**Claims**

1. Module for controlling a rotary electric machine for a motor vehicle comprising a rotor coil (Lrotor) and phases (U, V, W) of a stator supplied with power by an electrical network, the control module comprising a calculating program, a value of the rotor coil voltage (Vrot), a resistance value of the rotor coil (Rrot), a value of the rotor coil induction (Lrot) and in that the program estimates an estimated rotor coil current (Irot [k]) according to this formula: Irot[k] = Irot[k-1] + (Vrot[k-1] - Irot[k-1] x Rrot)/Lrot x Ts
in which:

o Irot[k-1] is the estimate of the rotor coil current previously calculated at time k-1
o Vrot [k-1] is the previous rotor coil voltage at time k-1
o Ts is the sampling time between the index k-1 and the index k,

and in which, to switch the electric machine from a motor mode to a neutral mode, said control module is configured to control a placing of the phases of the stator at the same potential after the estimated rotor coil current (Irot [k]) is equal to a predetermined value, for example 0 amperes.

2. Control module according to the preceding claim, in which, to switch from a motor mode to a neutral mode, said control module is configured to produce a stator command as a function of the estimated rotor coil current (Irot [k).

3. Control module according to one of the preceding claims, in which the control module comprises a network voltage input (Vdc) and in that the rotor coil voltage is equal to 0 V or is calculated by the control module according to this formula:

$$\mathtt{Vrot[k-1] \ = \ -1 \ x \ (Vdc[k-1] \ - \ Vdiode),}$$

where Vdiode is a constant equal, for example, to 0.7 V.

4. Rotary electric machine comprising a control module according to the preceding claim, comprising:

- a rotor comprising an induction coil,
- a stator comprising a winding having phases, and
- a rotor control unit comprising:

o a high-stage electronic switch (Q1) connected between the input of the induction coil and the positive terminal of the network,
oa low electronic switch (Q23) between ground and the input of the induction coil,
oa low output electronic switch (Q24) between the output of the induction coil and ground,
oa diode (D) comprising a cathode connected to the positive terminal of the network and an anode connected to the output of the induction coil,

in which the rotor control unit may control, in the event of a motor mode stop command, either according to a fast demagnetization instruction, the closing of the low electronic switch (Q23), the opening of the low output electronic switch (Q24) and the opening of the high-stage electronic switch (Q1), or according to a slow demagnetization instruction, the closing of the low electronic switch (Q23), the closing of the low output electronic switch (Q24) and the opening of the high-stage electronic switch (Q1),

in which, in the event of a fast demagnetization instruction, the previous rotor coil voltage is calculated according to the formula:

$$\mathtt{Vrot[k-1] \ = \ -1 \ x \ (Vdc[k-1] \ - \ Vdiode),}$$

and
in the event of a slow demagnetization instruction, the rotor coil voltage is equal to zero.

5. Rotary electric machine according to the preceding claim, comprising a temperature sensor in which the value of the rotor resistance (Rrot) is estimated as a function of the temperature measured by the temperature sensor.

6. Rotary electric machine according to one of the preceding claims, in which the value of the rotor coil induction (Lrot) is estimated as a function of an operating point of the machine estimated on the basis of the torque and speed.

7. Rotary electric machine according to one of the preceding claims, in which the control module comprises a step of transmitting a stator command and a rotor command, an instruction torque Tem[k] according to this formula:

-

$$\mathtt{Tem[k] \ = \ Tem\_0 \ x \ (Irot[k] \ / \ Irot\_0)\^2}$$

- where the rotor current Irot_0 is the estimated rotor current at the time when the control module receives the motor mode stop command and Tem_0 is the estimated electromagnetic torque of the machine at the time when the control module receives the motor mode stop command instruction until the estimated rotor coil current (Irot [k]) is equal to a predetermined value.

8. Rotary electric machine according to one of the preceding claims, comprising a voltage converter comprising high electronic switches and low electronic switches connected to the phases of the stator and in that, when the control module receives a motor mode stop command for a motor mode activated previously, the control module transmits a stator command to modify the pulse-width modulation (PWM) of the high-side electronic switches and of the low-side electronic switches according to the estimated rotor current (Irot k), such that the lower the estimated rotor current (Irot k), the more the pulse-width modulation is reduced in order to decrease the supply of power to the stator phases in terms of RMS voltage.

9. Method for stopping a motor mode of a rotary electric machine for a motor vehicle according to one of the preceding claims, comprising:

- a step of estimating the rotor coil current (Irot[K]) according to this formula: Irot[k] = Irot[k-1] + (Vrot[k-1] - Irot[k-1] x Rrot)/Lrot x Ts
in which:

oIrot[k-1] is the estimate of the rotor coil current previously calculated at time k-1
oVrot [k-1] is the previous rotor coil voltage at time k-1
oTs is the sampling time between the index k-1 and the index k,

- a step of receiving an engine stop command, comprising:

oa demagnetization sub-step controlling the opening of the high-stage electronic switch (Q1) and the closing of the low electronic switch (Q23), either according to a fast demagnetization instruction, by controlling the opening of the low output electronic switch (Q24), or according to a slow demagnetization instruction, by controlling the closing of the low output electronic switch (Q24), and
o a control sub-step for bringing the phases of the stator to the same potential after the estimated rotor coil current (Irot [K]) is equal to a predetermined value.

10. Method for stopping a motor mode of a rotary electric machine for a motor vehicle according to the preceding claim, further comprising:

- a step of calculating an instruction torque (Tem[k]) according to this formula: Tem[k] = Tem_0 x (Irot[k] / Irot_0)^2 where the rotor current Irot_0 is the estimated rotor current at the time when the control module receives the motor mode stop command and Tem_0 is the electromagnetic torque of an instruction at the time when the control module receives the motor mode stop command instruction, and
- a step of controlling the rotor and the stator as a function of the instruction torque until the estimated rotor coil current (Irot [k]) is equal to a predetermined value.

[Fig. 1]

[Fig. 2]

[Fig. 3]

Vdc [V]
Lrot [H]
Rrot [Ω]

Irot k-1

Calcul Irot K (délais)

Irot_0[A]
Tem_0[Nm]
Irot[A]

Estimateur du couple en dynamique

Tem[Nm]

Commande du stator

Commande du rotor

A

EP 4 059 131 B1

19

[Fig. 4]

EP 4 059 131 B1

[Fig. 5]

Vdc [V]

Irot k-1

Estimateur du courant du rotor (Lrot[H], Rrot[Ω])

Irot_0 [A]

Tem_0 [Nm]

Irot [A]

Estimateur du couple en dynamique

Tem[Nm]

L'algorithme en mode moteur

Commande du stator

Commande du rotor

[Fig. 6A]

[Fig. 6B]

**EP 4 059 131 B1**

**RÉFÉRENCES CITÉES DANS LA DESCRIPTION**

**Documents brevets cités dans la description**

- FR 3059179 A1

- FR 3077446 A1